Europäisches Patentamt

European Patent Office

Office européen des brevets

(19)

(11) Numéro de publication: **0 082 910**
**A1**

## (12) DEMANDE DE BREVET EUROPEEN

(21) Numéro de dépôt: **81870041.1**

(22) Date de dépôt: **20.10.81**

(51) Int. Cl.³: **C 04 B 9/02**

(43) Date de publication de la demande:
**06.07.83 Bulletin 83/27**

(84) Etats contractants désignés:
**AT BE CH FR GB IT LI**

(71) Demandeur: **Vuzdugan, Stefan Frans**
**Stationsstraat 14**
**B-2668 Tisselt(BE)**

(72) Inventeur: **Vuzdugan, Stefan Frans**
**Stationsstraat 14**
**B-2668 Tisselt(BE)**

(74) Mandataire: **De Broqueville, Luc Avocat**
**33, boulevard de Waterloo**
**B-1000 Bruxelles(BE)**

(54) **Procédé destiné à rendre ininflammable divers matériaux tels que des matériaux de construction.**

(57) "Procédé pour la fabrication de matériel de fonderie résistant au feu, avec la caractéristique qu'il consiste à faire réagir principalement dans le creuset approprié un mélange d'oxyde de magnésium, de magnésiumchloride hydraté et d'eau.

EP 0 082 910 A1

Croydon Printing Company Ltd

0082910

"PROCEDE POUR LA FABRICATION D'ARTICLES DE FONDERIES RESIS-
TANT AU FEU, AINSI QUE POUR RENDRE ININFLAMMABLE TOUTES
SORTES DE SUBSTANCES ET PRODUITS."

**TITRE MODIFIÉ
voir page de garde**

Formulé par:

Stefan Frans VUZDUGAN

————————————————————

L'invention dont question concerne un procédé pour la fabrication d'articles de fonderies résistant au feu ainsi que
pour rendre ininflammable toutes sortes de substances et
produits.

Suivant une première mise en oeuvre de l'invention, le procédé consiste à laisser réagir dans un moule de forme quelconque un mélange d'oxyde de magnésium, de magnésiumchloride hydraté et d'eau.

Ce procédé peut être appliqué pour la fabrication d'éléments de construction, de panneaux muraux, d'éléments pour
la séparation de murs, ...etc.
Au mélange précité on peut rajouter différentes substances
telles que de la craie, du vermiculite, du sable, du carbonate de calcium, de la fibre de verre, caoutchouc, plastic et autres substances semblables.

Suivant la quantité des jaugeages et la destination des articles de fonderie, on peut aussi y introduire une armature:
par exemple sous la forme de fines couches ou d'un tapis
de fibre de verre ou de laine de roche.

Suivant une deuxième forme d'utilisation le mélange peut
être employé pour revêtir et/ou impregner différents matériaux tels que des gaines de fils électriques ou encore
être mélangé avec des matières premières ou des substances
quelconques.

0082910

Des essais ont démontré que la résistance aux flammes des matériaux traités comme entre autres le papier kraft bitumé, le bois, les plaques d'agglomérés, est prolongé de façon considérable et surtout après que ceux-ci aient été traités suivant l'invention.

Quelque soit l'application de l'invention, le mélange de réaction est obtenu en mélangeant une mesure d'oxyde de magnésium avec de 0,4 à 0,5 mesures de magnésiumchloride hydraté et environ 0,5 mesures d'eau.

Ce dernier élément pouvant être remplacé par d'autres matières premières.

Il faut remarquer que le magnésiumchloride est déjà employé comme base pour le ciment dénommé SOREL, principalement pour la fabrication de revêtements monolithiques de planchers.

Il est aussi appliqué pour imiter la porcelaine: par exemple pour faire des pommeaux de porte.

L'emploi du magnésiumchloride comme rendant le matériel résistant au feu ou ininflammable, suivant le procédé décrit plus haut, n'est suivant la connaissance du demandeur décrit nulle part.

Dans la gamme des applications visées, le magnésiumchloride offre un grand avantage vis-à-vis de l'oxyde de magnésium qui est généralement employé pour la fabrication de matériaux réfractaires.

En effet, si on emploie une solution d'oxyde de magnésium comme moyen de revêtement, ou d'impregnation, on constate que le matériel traité éclate sous la chaleur.

Ceci n'est toutefois pas le cas après une réaction incluant du magnésiumchloride hydraté.

Il va de soi que les exemples d'application mentionnés ci-dessus ne le sont qu'à titre exemplatif et ne sont pas limitatifs.

REVENDICATIONS.                           0082910

1. Procédé pour la fabrication de matériels de fonderies résistant au feu avec la reconnaissance qu'il consiste principalement à faire réagir dans un moule de forme quelconque un mélange d'oxyde de magnésium, de magnésiumchloride hydraté et d'eau.

2. Le procédé suivant la demande I. avec les caractéristiques qu'au dit mélange divers composants peuvent être ajoutés tels que : la craie, le vermiculite, le carbonate de calcium, la fibre de verre, la laine de roche, et autres produits semblables sans que cette énumération ne soit limitative.

3. Le procédé suivant la demande I. avec la caractéristiques que dans le matériel de fonderie une armature est introduite.

4. Le procédé pour la fabrication de matériel de fonderie résistant au feu ainsi que pour rendre ininflammable toutes sortes de matières et de produits principalement comme ceux décrits ci-dessus.

Office européen
des brevets

**RAPPORT DE RECHERCHE EUROPEENNE**

**0082910**

Numéro de la demande

EP 81 87 0041

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| X | FR - A - 954 315 (SOC. TUNISIENNE DE PREFABRICATION SOTUPREF) <br><br> * résumé; page 1, lignes 13-16 et 20-42 * <br><br> --- | 1,2,4 | C 04 B 9/02 |
| X | US - A - 2 545 323 (J.F.M.V. DUFOUR) <br><br> * revendication 1; colonne 3, lignes 55-65; colonne 4, lignes 1-11 et 20-35 * <br><br> --- | 1,2,4 | |
| X | US - A - 4 158 570 (R.G. IRWIN) <br><br> * colonne 1, lignes 6-15; colonne 2, lignes 11-26; colonne 4, lignes 40-45 * <br><br> --- | 1-4 | |
| X | FR - A - 2 104 850 (MAGNESIUM ELEKTRON) <br><br> * revendications 1-3,6,7,11-13 * <br><br> --- | 1,2,4 | C 04 B 9/02 |
| X | FR - A - 944 419 (L.P.P. DUROX) <br><br> * page 1, lignes 19-26 * <br><br> --- | 1,3 | |
| | | ./. | |

**DOMAINES TECHNIQUES RECHERCHES (Int. Cl. 3)**

Le présent rapport de recherche a été établi pour toutes les revendications

| Lieu de la recherche | Date d'achèvement de la recherche | Examinateur |
|---|---|---|
| La Haye | 22-06-1982 | SCHURMANS |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82

Office européen
des brevets

**RAPPORT DE RECHERCHE EUROPEENNE**

| Catégorie | Citation du document avec indication, en cas de besoin, des parties pertinentes | Revendication concernée |
|---|---|---|
| | **DOCUMENTS CONSIDERES COMME PERTINENTS** | |
| X | US - A - 1 994 492 (L.W. VAN DYKE) <br><br> * revendications 1-9; page 1, lignes 25-39 * <br><br> --- | 1,4 |
| X | FR - A - 392 490 (A. LEVY) <br><br> * résumé 1-3; page 2, lignes 50-59* | 1,4 |
| | --- | |
| X | FR - A - 818 591 (KALI-FORSCHUNGS-ANSTALT) <br><br> * résumé * | 1,4 |
| | --------- | |

**CLASSEMENT DE LA DEMANDE (Int. Cl.³)**

**DOMAINES TECHNIQUES RECHERCHES (Int Cl.³)**